# EUROPÄISCHE PATENTSCHRIFT

(11) **EP 2 673 173 B1**
(45) Veröffentlichungstag und Bekanntmachung des Hinweises auf die Patenterteilung: **06.04.2016**
(21) Anmeldenummer: 12702175.6
(22) Anmeldetag: 18.01.2012
(51) Int. Cl.: B60R 22/34

(54) **GURTAUFROLLER FÜR EINEN FAHRZEUG-SICHERHEITSGURT**
BELT RETRACTOR FOR A VEHICLE SAFETY BELT
RÉTRACTEUR DE CEINTURE DE SÉCURITÉ POUR VÉHICULE

(30) Priorität: 10.02.2011 DE 102011010973
(43) Veröffentlichungstag der Anmeldung: 18.12.2013
(73) Patentinhaber: TRW Automotive GmbH, 73553 Alfdorf (DE)
(72) Erfinder: MICHEL, Frédéric, 73527 Schwaebisch Gmuend (DE)
(74) Vertreter: Prehn, Manfred
(86) Internationale Anmeldenummer: PCT/EP2012/000203
(87) Internationale Veröffentlichungsnummer: WO 2012/107162

(56) Entgegenhaltungen:
- EP-A2- 1 053 918
- DE-A1- 3 244 204
- DE-A1- 19 744 836
- DE-T2- 60 130 276

## Beschreibung

Die Erfindung betrifft einen Gurtaufroller für einen Fahrzeug-Sicherheitsgurt.

Ein Gurtaufroller enthält üblicherweise einen Rahmen, der aus Metall besteht und in dem eine Gurtspule gelagert ist. Auf der Gurtspule kann der Sicherheitsgurt aufgewickelt werden. Ein Sperrmechanismus ermöglicht es, die Gurtspule in Abhängigkeit von vorbestimmten Parametern zu sperren, sodass der Sicherheitsgurt entweder gar nicht oder nur entgegen einer sehr hohen Rückhaltekraft von dem Gurtaufroller abgezogen werden kann, um den Fahrzeuginsassen zurückzuhalten.

Die Gurtspule besteht meist aus Zinkdruckguss und enthält einen Schlitz, durch den hindurch sich das Gurtband erstreckt. Zur Befestigung des Sicherheitsgurtes an der Gurtspule wird meist ein Stift verwendet, der in eine Schlaufe des Gurtbandes eingelegt ist und einen Durchmesser hat, der größer ist als die Dicke des Schlitzes.

Aus der Patentliteratur ist es darüber hinaus bekannt, Gurtspulen und/oder den Rahmen bzw. das Gehäuse des Gurtaufrollers aus Kunststoff zu fertigen. Damit soll einerseits eine Gewichtsreduzierung und andererseits eine Kostenreduzierung erfolgen. Derartiger Gurtaufroller sind beispielsweise aus der EP 1 637 413 B1 und der DE 40 23 662 A1 bekannt. Gehäuse und Spulen aus Kunststoff haben bisher aber keine praktische Anwendung in Kraftfahrzeugen gefunden. Dies liegt unter anderem daran, dass die Sicherheitsanforderungen der Fahrzeughersteller und gesetzliche Lastvorgaben, insbesondere Bruchlasten, so hoch sind, dass sie unter Beibehaltung des Einbauvolumens herkömmlicher Gurtaufroller von Gehäusen und Spulen aus Kunststoff bisher nicht ohne weiteres eingehalten werden können.

In der gattungsgemäßen DE 197 44 836 A1 ist ein Gurtaufroller für einen Fahrzeug-Sicherheitsgurt beschrieben, der einen Rahmen mit zwei Seitenschenkeln aufweist, zwischen denen eine Gurtspule angeordnet ist, die aus Kunststoff gefertigt ist. Die Gurtspule ist an jeder Stirnseite mit einem Flansch versehen, und in der Gurtspule ist ein Haltestift aufgenommen, an dem das Gurtband befestigt ist. Dieser Haltestift erstreckt sich bis in die Flansche der Gurtspule.

Aus der DE 601 30 276 T2 ist ein Gurtaufroller bekannt, bei dem der Rahmen aus einem Kunststoff besteht, der insbesondere ein glasfaserverstärktes Polymer ist.

Die Aufgabe der Erfindung besteht darin, einen Gurtaufroller mit Rahmen und Gurtspule zu schaffen, bei dem sowohl der Rahmen als auch die Gurtspule aus Kunststoff bestehen, und der ohne wesentliche Vergrößerung des Einbauvolumens gegenüber herkömmlichen Gurtaufrollern in der Lage ist, hohe Abzugskräfte aufzunehmen und die gesetzlichen Anforderungen hinsichtlich Bruchlast erfüllt.

Zur Lösung dieser Aufgabe ist erfindungsgemäß ein Gurtaufroller für einen Fahrzeug-Sicherheitsgurt vorgesehen, mit einem Rahmen, der aus Kunststoff besteht und zwei Seitenschenkel aufweist, zwischen denen eine Gurtspule angeordnet ist, die ebenfalls aus Kunststoff besteht, Zur Befestigung des Gurtbandes an der Gurtspule ist ein Haltestift vorgesehen, der in der Gurtspule aufgenommen ist. Dieser Haltestift erstreckt sich bis in die Flansche der Gurtspule. Dies ermöglicht es, die vom Gurtband auf den Haltestift ausgeübten Kräfte, wenn das Gurtband vollständig von der Gurtspule abgezogen ist, unmittelbar in die Flansche und von diesen in die Seitenschenkel des Rahmens einzuleiten. Hierfür ist es vorgesehen, dass der Haltestift eine Länge hat, die etwa der Breite des Rahmens entspricht.

Vorzugsweise liegt der Haltestift in seinem Bereich zwischen den beiden Flanschen frei. Dies ermöglicht, das Gurtband nachträglich um den Haltestift herumzuführen, nachdem dieser an der Gurtspule montiert ist.

Vorzugsweise ist der Haltestift in die Gurtspule eingespritzt. Dies vermeidet einen separaten Montagevorgang.

Um hohen Bruchlasten zu widerstehen und hohe Abzugskräfte des Gurtbandes aufnehmen zu können ist es weiterhin vorteilhaft, wenn die Gurtspule an jeder Stirnseite mit einem Flansch versehen ist, der eine Blockierverzahnung und eine Abstützfläche aufweist, und der Rahmen in jedem Seitenschenkel mit einem Verzahnungsbereich und einer Anlagefläche für die Gurtspule versehen ist. Der Verzahnungsbereich des Gurtaufrollers zusammen mit der Blockierverzahnung der Gurtspule gewährleistet, dass Blockiermomente, die bei gesperrter Gurtspule durch die Zugkräfte des Gurtbandes erzeugt werden, zuverlässig vom Rahmen aufgenommen werden können. Die Anlagefläche am Rahmen zusammen mit dem Abstützbereich an der Gurtspule gewährleistet, dass die wirkenden Zugkräfte zuverlässig vom Rahmen aufgenommen werden. Dies ermöglicht es, die nötigen Lasten mit einem Rahmen aufzunehmen, der überwiegend oder vollständig aus Kunststoff besteht.

Vorzugsweise sind die Blockierverzahnung und die Abstützfläche jeweils ringförmig ausgeführt und in axialer Richtung benachbart angeordnet sind. Dies führt zu einer kompakten Gestaltung der Gurtspule.

Gemäß einer bevorzugten Ausführungsform liegt die Abstützfläche axial innerhalb der Blockierverzahnung. Insbesondere wenn die Blockierverzahnung einen kleineren Durchmesser hat als die Abstützfläche, ist die Gurtspule unverlierbar im Rahmen aufgenommen.

Vorzugsweise ist ein Stützsteg vorgesehen, der einstückig mit den beiden Seitenschenkeln des Rahmens ausgeführt ist und diese miteinander verbindet. Der Stützsteg erhöht die Stabilität des Rahmens, da er ein seitliches Ausweichen der beiden Seitenschenkel verhindert.

Vorzugsweise erstreckt sich der Verzahnungsbereich über einen Winkel von maximal 120°. Da die Abzugsrichtung des Gurtbandes vom Gurtaufroller bekannt ist, können die wirkenden Blockiermomente bereits mit nur einem lokalen Verzahnungsbereich aufgenommen werden. Auf diese Weise ist es nicht nötig, im Spritzgusswerkzeug für den Rahmen eine Negativform der Verzahnung über den gesamten Umfang vorzusehen.

Gemäß einer bevorzugten Ausführungsform ist vorgesehen, dass die Blockierverzahnung und der Verzahnungsbereich hinterschnitten ausgeführt sind. Dies unterstützt eine zuverlässige Drehmomentübertragung.

Gemäß einer bevorzugten Ausführungsform ist die Gurtspule in ihrem Mittelabschnitt massiv ausgeführt. Diese Gestaltung beruht auf der Erkenntnis, dass die Festigkeit der Gurtspule erheblich erhöht werden kann, wenn der Mittelabschnitt ohne den bisher üblichen Schlitz für das Gurtband ausgeführt wird.

Gemäß der bevorzugten Ausführungsform der Erfindung ist die Gurtspule verliersicher im Rahmen aufgenommen.

Gemäß einer Ausgestaltung der Erfindung ist vorgesehen, dass die Gurtspule einen Mittelabschnitt zwischen den beiden Flanschen aufweist, der in radialer Richtung komprimierbar ist. Mit dieser Gestaltung kann integral in der Gurtspule eine Kraftbegrenzungsfunktion verwirklicht werden, da eine Verringerung des Durchmessers des Mittelabschnittes bei hohen Gurtbandkräften dazu führt, dass zusätzliches Gurtband von der Gurtspule abgezogen werden kann.

Ein komprimierbarer Mittelabschnitt kann beispielsweise dadurch gebildet sein, dass die Gurtspule in ihrem Mittelabschnitt mehrere Rippen aufweist. Diese haben dann eine solche Festigkeit, dass sie bei den gewünschten radialen Kompressionskräften nachgeben.

Alternativ kann auch vorgesehen sein, dass der Mittelabschnitt aus einem Schaummaterial besteht. Das Schaummaterial kann vom Gurtband in radialer Richtung zusammengedrückt werden, wenn entsprechend hohe Zugkräfte im Gurtband wirken. Dabei ist das Schaummaterial vorzugsweise als Beschichtung auf einem Kern aufgetragen, der aus einem Material höherer Festigkeit besteht.

Die Erfindung wird nachfolgend anhand einer bevorzugten Ausführungsform beschrieben, die in den beigefügten Zeichnungen dargestellt ist. In diesen zeigen:

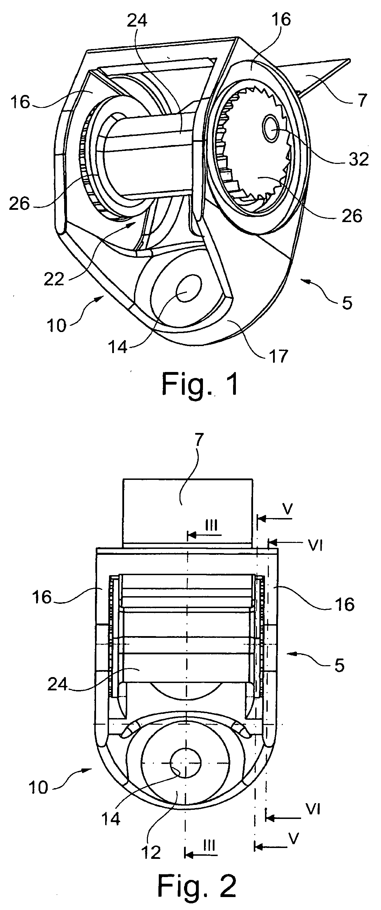

- Figur 1 in einer perspektivischen Ansicht einen erfindungsgemäßen Gurtaufroller;
- Figur 2 den Gurtaufroller von Figur 1 in einer Vorderansicht;
- Figur 3 einen Schnitt entlang der Ebene III-III von Figur 2;
- Figur 4 einen Schnitt entlang der Ebene IV-IV von Figur 3;
- Figur 5 einen Schnitt entlang der Ebene V-V von Figur 2; und
- Figur 6 einen Schnitt entlang der Ebene VI-VI von Figur 2.

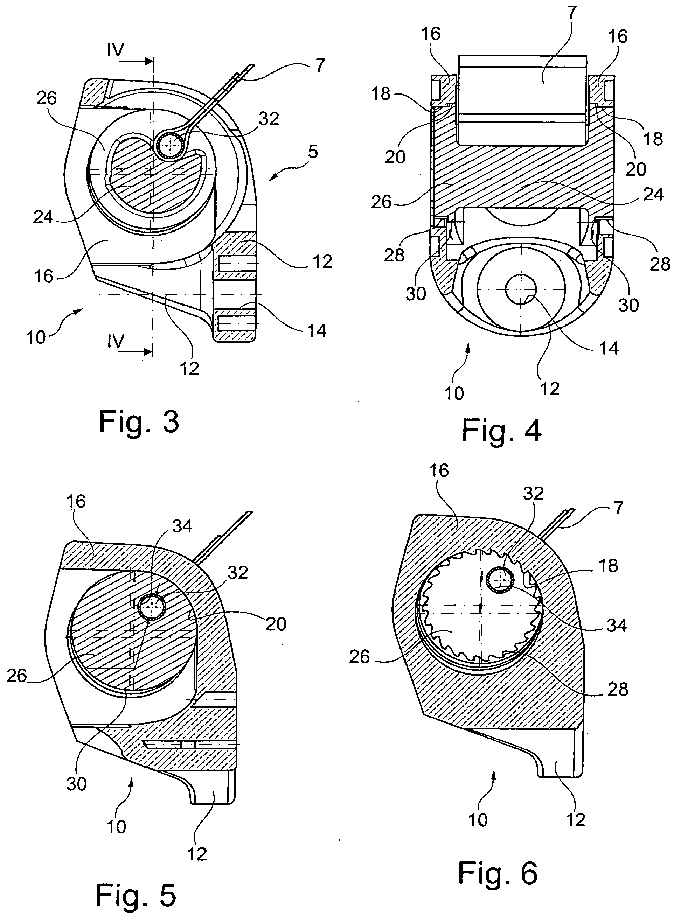

In den Figuren ist ein Gurtaufroller 5 gezeigt, der ein Gurtband 7 eines Sicherheitsgurtes aufnehmen kann. Der Gurtaufroller enthält einen Rahmen 10, der einen Befestigungsabschnitt 12 mit einer Befestigungsöffnung 14 aufweist, soweit zwei Seitenschenkel 16. Der Befestigungsabschnitt 12 erstreckt sich über weniger als die Höhe des gesamten Rahmens (siehe insbesondere Figur 3), sodass die Auflagefläche und somit die Schnittstelle zur Fahrzeugkarosserie auf eine Minimalfläche reduziert ist.

Die beiden Seitenschenkel 16 sind durch einen Stützsteg 17 miteinander verbunden, der, bezogen auf die Gurtspule 22, der Befestigungsöffnung 14 diametral gegenüberliegt. In den beiden Seitenschenkeln 16 des Gurtaufrollers sind jeweils nebeneinanderliegend ein Verzahnungsbereich 18 und eine Anlagefläche 20 vorgesehen. Der Verzahnungsbereich 18 enthält eine hinterschnittene Verzahnung und erstreckt sich über einen Winkelbereich von hier weniger als 120°. Die Mitte des Verzahnungsbereichs fällt dabei etwa mit der Richtung des Gurtbandabzugs vom Gurtaufroller zusammen (siehe Figur 6). Die Anlagefläche 20 ist hier etwa viertelkreisförmig ausgeführt (siehe Figur 5) und etwa in demselben Sektor angeordnet wie der Verzahnungsbereich 18. Wie insbesondere in Figur 4 zu sehen ist, sind der Verzahnungsbereich 18 und die Anlagenfläche 20, bezogen auf die Mittelachse der Gurtspule, axial nebeneinanderliegend angeordnet, wobei der Verzahnungsbereich 18 jeweils außen liegt und der Abstützbereich innerhalb.

Zwischen den beiden Seitenschenkeln 16 ist eine Gurtspule 22 angeordnet, die einen Mittelabschnitt 24 und an jeder Stirnseite einen Flansch 26 aufweist. Jeder Flansch 26 ist mit einer Blockierverzahnung 28 und einer Abstützfläche 30 versehen, die ringförmig ausgeführt ist. Wie insbesondere in Figur 4 zu sehen ist, hat die Blockierverzahnung 28 einen kleineren Durchmesser als die Abstützfläche 30. Die beiden Abstützflächen 30 liegen dabei innerhalb der beiden Blockierverzahnungen 28.

Die zur Lagerung der Gurtspule am Rahmen verwendeten Lagerschalen sowie der zur Blockierung der Gurtspule notwendige Sperrmechanismus sind hier nicht gezeigt.

Zur Befestigung des Gurtbandes 7 ist ein Haltestift 32 vorgesehen, der aus Metall besteht und in jeweils einer Öffnung 34 in den Flanschen 26 der Gurtspule 22 aufgenommen ist. Entlang des Mittelabschnitts 24 der Gurtspule 22 liegt der Haltestift 32 frei, sodass das Gurtband um ihn herumgeschlungen und dann vernäht werden kann. Der Haltestift 32 hat eine Länge, die der axialen Länge der Gurtspule 22 entspricht. Somit erstreckt sich der Haltestift 32 von der Außenseite eines Flansches 26 zur Außenseite des zweiten Flansches.

Der Rahmen 10 und die Gurtspule 22 bestehen beide aus Kunststoff und sind insbesondere spritzgegossen. Auch der Haltestift 32 kann dabei unmittelbar in die Flansche 26 der Gurtspule 22 eingespritzt werden.

Im Betrieb wird die Gurtspule dadurch gesperrt, dass sie im Bedarfsfall so weit relativ zum Rahmen 10 verlagert wird, dass ihre Blockierverzahnung 28 in den Verzahnungsbereich 18 im Rahmen 10 eingreift. Aufgrund der hinterschnitten ausgeführten Verzahnung gewährleistet dies eine zuverlässige Momentenübertragung. Besonders hohe Zuglasten werden zusätzlich durch Anlage der Abstützflächen 30 der Gurtspule 22 an den Anlageflächen 20 des Rahmens 10 übertragen. Wie durch Vergleich der Schnittansichten in den Figuren 5 und 6 zu sehen ist, sind die Seitenschenkel 16 in dem die Blockierverzahnung 28 umgebenden Bereich sehr massiv ausgeführt und umgeben die Gurtspule allseitig, während im Bereich der Abstützfläche 30 lediglich dort Material vorgesehen ist, wo die Abstützwirkung erforderlich ist. Durch die Ausgestaltung des Haltestifts 32, der sich bis in die Flansche 26 der Gurtspule erstreckt, werden die vom Gurtband 7 auf den Haltestift 32 ausgeübten Kräfte unmittelbar in den Rahmen abgeleitet, ohne dass der Mittelabschnitt der Gurtspule hierbei belastet wird. Dies ist insbesondere dann der Vorteil, wenn im Gurtband 7 sehr hohe Zugkräfte in einem Zustand wirken, in welchem das gesamte Gurtband von der Gurtspule abgezogen ist.

Gemäß einer nicht dargestellten Weiterbildung kann der Mittelabschnitt 24 der Gurtspule 22 nicht vollständig massiv ausgeführt werden, wie dies in den Figuren gezeigt ist, sondern mit mehreren Rippen, die durch besonders hohe Zugkräfte im Gurtband deformierbar sind. Bei einer Deformation der Rippen verringert sich der Durchmesser der Gurtspule 22, sodass weiteres Gurtband abgezogen werden kann. Auf diese Weise lässt sich eine Art kontrollierter Filmspuleneffekt erzielen, der zur kontrollierten Kraftbegrenzung genutzt werden kann, ohne dass separate Kraftbegrenzer, beispielsweise in der Form eines Torsionsstabs, eingebaut werden müssten. Alternativ zu den Rippen kann auch vorgesehen sein, dass am Mittelabschnitt 24 der Gurtspule eine Schicht aus einem Schaummaterial vorgesehen ist, das bei besonders hohen Zugkräften vom Gurtband zusammengedrückt wird. Auch dies ermöglicht, weiteres Gurtband zum Zwecke der Kraftbegrenzung von der drehfest blockierten Gurtspule abzuziehen.

## Patentansprüche

1. Gurtaufroller (5) für einen Fahrzeug-Sicherheitsgurt, mit einem Rahmen (10), der zwei Seitenschenkel (16) aufweist, zwischen denen eine Gurtspule (22) angeordnet ist, die aus Kunststoff besteht, wobei die Gurtspule (22) an jeder Stirnseite mit einem Flansch (26) versehen ist, und in der Gurtspule (22) ein Haltestift (32) aufgenommen ist, an dem das Gurtband (7) befestigt ist, und dieser Haltestift (32) sich bis in die Flansche (26) der Gurtspule (22) erstreckt, **dadurch gekennzeichnet, dass** der Rahmen (10) ebenfalls aus Kunststoff besteht, und dass der Haltestift (32) eine Länge hat, die etwa der Breite des Rahmens (10) entspricht, so dass die vom Gurtband (7) auf den Haltestift (32) ausgeübten Kräfte, wenn das Gurtband (7) vollständig von der Gurtspule(22) abgezogen ist, unmittelbar in die Flansche (26) und von diesen in die Seitenschenkel (16) des Rahmens (10) eingeleitet werden.

2. Gurtaufroller nach Anspruch 1, **dadurch gekennzeichnet, dass** der Haltestift (32) in seinem Bereich zwischen den beiden Flanschen (26) freiliegt.

3. Gurtaufroller nach einem der Ansprüche 1 bis 2, **dadurch gekennzeichnet, dass** der Haltestift (32) in die Gurtspule (22) eingespritzt ist.

4. Gurtaufroller nach einem der vorhergehenden Ansprüche, **dadurch gekennzeichnet, dass** die Gurtspule (22) in ihrem Mittelabschnitt (24) massiv ausgeführt ist.

5. Gurtaufroller nach einem der vorhergehenden Ansprüche, **dadurch gekennzeichnet, dass** die Flansche der Gurtspule eine Blockierverzahnung (28) und eine Abstützfläche (30) aufweisen, und der Rahmen in jedem Seitenschenkel mit einem Verzahnungsbereich (18) und einer Anlagefläche (20) für die Gurtspule (22) versehen ist.

6. Gurtaufroller nach einem der vorhergehenden Ansprüche, **dadurch gekennzeichnet, dass** die Blockierverzahnung (28) und die Abstützfläche (30) jeweils ringförmig ausgeführt und in axialer Richtung benachbart angeordnet sind.

7. Gurtaufroller nach einem der vorhergehenden Ansprüche, **dadurch gekennzeichnet, dass** die Abstützfläche (30) axial innerhalb der Blockierverzahnung (28) liegt.

8. Gurtaufroller nach einem der vorhergehenden Ansprüche, **dadurch gekennzeichnet, dass** die Blockierverzahnung (28) einen kleineren Durchmesser hat als die Abstützfläche (30).

9. Gurtaufroller nach einem der vorhergehenden Ansprüche, **dadurch gekennzeichnet, dass** ein Stützsteg (17) vorgesehen ist, der einstückig mit den beiden Seitenschenkeln (16) des Rahmens (10) ausgeführt ist und diese miteinander verbindet.

10. Gurtaufroller nach einem der vorhergehenden Ansprüche, **dadurch gekennzeichnet, dass** der Verzahnungsbereich (18) sich über einen Winkel von maximal 120° erstreckt.

11. Gurtaufroller nach einem der vorhergehenden Ansprüche, **dadurch gekennzeichnet, dass** die Blockierverzahnung (28) und der Verzahnungsbereich (18) hinterschnitten ausgeführt sind.

12. Gurtaufroller nach einem der vorhergehenden Ansprüche, **dadurch gekennzeichnet, dass** die Gurtspule (22) verliersicher im Rahmen (10) aufgenommen ist.

13. Gurtaufroller nach einem der vorhergehenden Ansprüche, **dadurch gekennzeichnet, dass** die Gurtspule (22) einen Mittelabschnitt (24) zwischen den beiden Flanschen (26) aufweist, der in radialer Richtung komprimierbar ist.

14. Gurtaufroller nach Anspruch 13, **dadurch gekennzeichnet, dass** der Mittelabschnitt (24) mehrere Rippen aufweist.

15. Gurtaufroller nach Anspruch 13 oder Anspruch 14, **dadurch gekennzeichnet, dass** der Mittelabschnitt (24) aus einem Schaummaterial besteht.

## Claims

1. A belt retractor (5) for a vehicle seat belt comprising a frame (10) having two side legs (16) between which a belt reel (22) equally made of plastic material is arranged, wherein the belt reel (22) is provided with a flange (26) at each of the end faces and in the belt reel (22) a retaining pin (32) is accommodated to which the belt webbing (7) is fastened, and said retaining pin (32) extends into the flanges (26) of the belt reel (22), **characterized in that** the frame (10) is also made of plastic material, and that the retaining pin (32) has a length corresponding approximately to the width of the frame (10), so that the forces exerted by the belt webbing (7) on the retaining pin (32), when the belt webbing (7) is completely unwound from the belt reel (22), are directly introduced into the flanges (26) and from there into the side legs (16) of the frame (10).

2. The belt retractor according to claim 1, **characterized in that** the retaining pin (32) is exposed in its area between the two flanges (26).

3. The belt retractor according to any one of the claims 1 or 2, **characterized in that** the retaining pin (32) is injected into the belt reel (22).

4. The belt retractor according to any one of the preceding claims, **characterized in that** the belt reel (22) is massive in its central portion (24).

5. The belt retractor according to any one of the preceding claims, **characterized in that** the flanges of the belt reel include blocking tooth system (28) and a support surface (30) and the frame is provided in each side leg with a toothing area (18) and a contact surface (20) for the belt reel (22).

6. The belt retractor according to any one of the preceding claims, **characterized in that** each of the blocking tooth system (28) and the support surface (30) takes a ring shape and is arranged adjacent in axial direction.

7. The belt retractor according to any one of the preceding claims, **characterized in that** the support surface (30) is located axially inside the blocking tooth system (28).

8. The belt retractor according to any one of the preceding claims, **characterized in that** the blocking tooth system (28) have a smaller diameter than the support surface (30).

9. The belt retractor according to any one of the preceding claims, **characterized in that** there is provided a supporting land (17) that is formed integrally with the two side legs (16) of the frame (10) and interconnects the same.

10. The belt retractor according to any one of the preceding claims, **characterized in that** the toothing area (18) extends over an angle of no more than 120°.

11. The belt retractor according to any one of the preceding claims, **characterized in that** the blocking tooth system (28) and the toothing area (18) are designed to be undercut.

12. The belt retractor according to any one of the preceding claims, **characterized in that** the belt reel (22) is captively accommodated in the frame (10).

13. The belt retractor according to any one of the preceding claims, **characterized in that** the belt reel (22) includes a central portion (24) compressible in radial direction between the two flanges (26).

14. The belt retractor according to claim 13, **characterized in that** the central portion (24) has plural ribs.

15. The belt retractor according to claim 13 or claim 14, **characterized in that** the central portion (24) is made of foam material.

## Revendications

1. Enrouleur de ceinture (5) pour une ceinture de sécurité de véhicule, comprenant un châssis (10) qui possède deux branches latérales (16), entre lesquelles est disposé une bobine de ceinture (22), qui est également réalisée en matière plastique, dans lequel la bobine de ceinture (22) est munie à chaque extrémité d'un flasque (26), et dans la bobine de ceinture (22) est logée une goupille de retenue de retenue (32), à laquelle la sangle de ceinture (7) est fixée et dont la goupille de retenue (32) s'étend aux deux flasques (26) de la bobine de ceinture (22), **caractérisé en ce que** le châssis (10) est constitué également en matière plastique, et que la goupille de retenue (32) à une longueur qui correspond approximativement à la largeur du châssis (10), de sorte que les forces appliquées par la sangle de ceinture (7) sur la goupille de retenue (32) lorsque la sangle de ceinture (7) est complètement déroulée de la bobine de ceinture (22), d'être immédiatement propagées dans le flasque (26) et dans les branches latérales (16) du châssis (10).

2. Enrouleur de ceinture selon la revendication 1, **caractérisé en ce que** la goupille de retenue (32) est placée libre dans la zone entre les deux flasques (26).

3. Enrouleur de ceinture selon l'une quelconque des revendications 1 à 2, **caractérisé en ce que** la goupille de retenue (32) est injectée dans la bobine de ceinture (22).

4. Enrouleur de ceinture selon l'une quelconque des revendications précédentes, **caractérisé en ce que** la bobine de ceinture (22) dans sa partie centrale (24) est pleine.

5. Enrouleur de ceinture selon l'une quelconque des revendications précédentes, **caractérisé en ce que** les flasques de la bobine de ceinture présentant une denture de blocage (28) et une surface d'appui (30) et que chaque branche latérale du châssis comporte une partie dentée (18) et une surface d'appui (20) pour la bobine de ceinture (22).

6. Enrouleur de ceinture selon l'une quelconque des revendications précédentes, **caractérisé en ce que** la denture de blocage (28) et la surface d'appui (30) sont disposées circonférentiellement et adjacentes dans la direction axiale.

7. Enrouleur de ceinture selon l'une quelconque des revendications précédentes, **caractérisé en ce que** la surface d'appui (30) se trouve axialement à l'intérieur de la denture de blocage (28).

8. Enrouleur de ceinture selon l'une quelconque des revendications précédentes, **caractérisé en ce que** la denture de blocage (28) a un diamètre plus petit que la surface d'appui (30).

9. Enrouleur de ceinture selon l'une quelconque des revendications précédentes, **caractérisé en ce qu'**une nervure de renfort (17) est prévue, qu'elle est solidaire des deux branches latérales (16) du châssis (10) et les relie l'une à l'autre.

10. Enrouleur de ceinture selon l'une quelconque des revendications précédentes, **caractérisé en ce que** la région dentée (18) s'étend sur un angle maximal de 120 °.

11. Enrouleur de ceinture selon l'une quelconque des revendications précédentes, **caractérisé en ce que** la denture de blocage (28) et la région dentée (18) sont fabriquées de telle sorte que l'une est la contre-empreinte de l'autre.

12. Enrouleur de ceinture selon l'une quelconque des revendications précédentes, **caractérisé en ce que** la bobine de ceinture (22) est montée inamovible dans le châssis (10).

13. Enrouleur de ceinture selon l'une quelconque des revendications précédentes, **caractérisé en ce que** la bobine de ceinture (22) possède une partie centrale (24) qui est compressible entre les deux flasques (26) dans la direction radiale.

14. Enrouleur de ceinture selon la revendication 13, **caractérisé en ce que** la partie centrale (24) présente une pluralité de nervures.

15. Enrouleur de ceinture selon la revendication 13 ou la revendication 14, **caractérisé en ce que** la partie centrale (24) est constituée d'un matériau en mousse.
